# DEMANDE DE BREVET EUROPEEN

(11) **EP 2 299 089 A1**
(43) Date de publication de la demande: **23.03.2011**
(21) Numéro de dépôt: 10009374.9
(22) Date de dépôt: 09.09.2010
(51) Int. Cl.: F02B 77/00, B65D 39/00, F16L 55/136

(54) **Dispositif d'étanchéité d'un orifice sensiblement cylindrique**

(30) Priorité: 10.09.2009 FR 0956209
(71) Demandeur: Carl Freudenberg KG, 69469 Weinheim (DE)
(72) Inventeur: Jeanne, Olivier, 87200 St. Junien (FR)

(57) **Abrégé**

L'objet de l'invention est un dispositif d'étanchéité d'un orifice dun moteur s'étendant selon une direction, ledit dispositif comportant un insert métallique (22) avec une portée (28) approximativement cylindrique ou légèrement conique dont ou moins la face extérieure est recouverte d'un revêtement élastique (24) susceptible d'être comprimé entre ledit insert et le moteur, **caractérisé en ce que** la portée (28) de l'insert (22) a des formes adaptées pour pouvoir s'expanser radialement et ainsi renforcer l'effort de compression du revêtement élastique (24), et en ce que l'insert (22) comprend plusieurs languettes s'étendant radialement avec une longueur telle que lorsque ledit dispositif est mis en place, les extrémités desdites languettes viennent en contact avec la paroi de l'orifice du moteur et génèrent des efforts concentriques qui tendent à déformer l'insert (22) et à produire une expansion de ladite portée (28).

## Description

La présente invention concerne un dispositif d'étanchéité d'un orifice sensiblement cylindrique.

Un bloc moteur ou une culasse comprend des orifices appelés orifices techniques qui sont nécessaires lors de leur fabrication, notamment lors de la phase de moulage pour permettre le passage de noyaux ou lors de la phase d'usinage pour assurer par exemple leur bridage.

En fonctionnement, ces orifices doivent être obturés pour ne plus faire communiquer l'intérieur des cavités du moteur avec l'extérieur et empêcher les fuites d'huile ou de liquide de refroidissement.

Selon une première variante, pour obturer un orifice, on peut utiliser un bouchon comportant un corps cylindrique fileté avec à une première extrémité une tête. En complément, le moteur comprend un filetage au niveau de l'orifice permettant le vissage du bouchon. Un joint torique est généralement intercalé entre la tête du bouchon et le moteur pour assurer l'étanchéité.

Un tel bouchon est notamment décrit dans le document DE-102005017431.

Ce type de bouchon a pour avantage d'être facilement démontable ou remplaçable. Toutefois, un tel bouchon nécessite un usinage spécifique sur le moteur, un élément complémentaire pour "étanchéité si bien que son coût est relativement élevé.

Selon une deuxième variante décrite notamment dans le document AU-21136/83, on peut utiliser un bouchon déformable de forme conique emmanché en force dans l'orifice. Cette solution est relativement économique et ne nécessite pas un élément supplémentaire comme un joint pour assurer l'étanchéité. Toutefois, elle a pour principaux inconvénients d'être difficilement démontable et d'engendrer des contraintes importantes dans le moteur susceptibles d'engendrer des fissures et d'éventuelles fuites.

Une troisième variante décrite dans le document DE-8814892 propose une solution économique qui ne nécessite pas d'outillage spécifique pour sa mise en place ou un élément complémentaire comme un joint pour assurer l'étanchéité et ne génère pas de contraintes trop importantes dans le moteur.

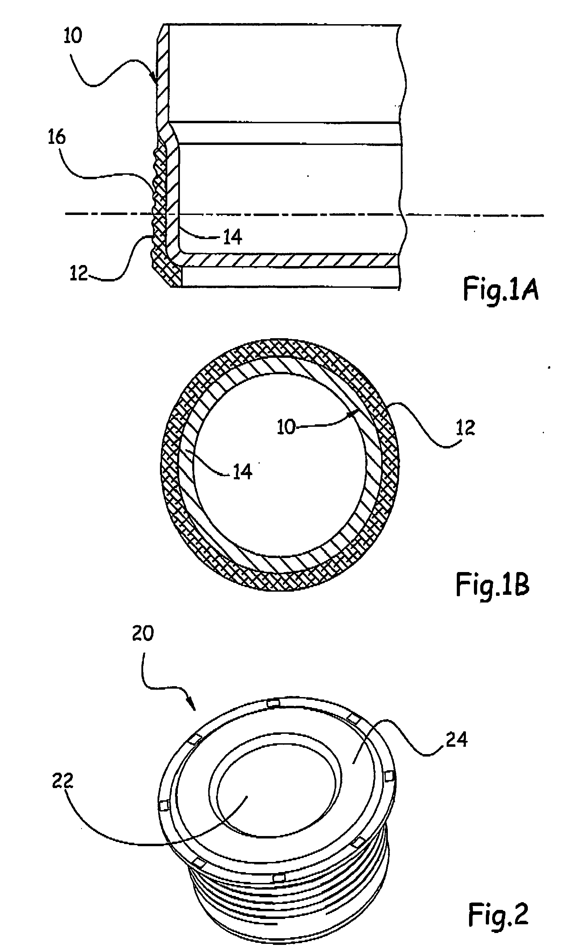

Ce type de bouchon illustré sur les figures 1A et 1B comprend un insert 10 métallique sous, forme d'un corps cylindrique fermé à une extrémité dont une partie de la surface extérieure comprend un revêtement élastique 12, par exemple un élastomère.

L'insert 10 est généralement obtenu par emboutissage d'une plaque métallique.

Cet insert 10 présente au niveau de sa portion revêtue une forme circulaire continue 14, afin d'obtenir au niveau du revêtement un insert rigide quasi indéformable permettant de compresser le revêtement élastique 12 entre l'insert 10 et le moteur.

L'étanchéité est obtenue en partie grâce à la compression du revêtement élastique 12 entre l'insert et le moteur.

Pour renforcer l'étanchéité, le revêtement élastique 12 peut avoir des formes adaptées comme par exemple des nervures circulaires 16,

Dans le temps, le revêtements 12 a tendance à perdre ses propriétés élastiques, notamment en raison des cycles thermiques subis par le moteur.

Or, l'étanchéité dépendant essentiellement des caractéristiques élastiques du revêtement 12, ce type de bouchon peut dans le temps ne plus présenter une étanchéité suffisante.

Selon ce mode de réalisation, la partie cylindrique non revêtue est emmanchée dans l'orifice et participe à la fonction d'étanchéité et de maintien du bouchon. Par conséquent, pour ce mode de réalisation, compte tenu de l'emmanchement on retrouve les mêmes inconvénients que ceux précisés pour la seconde solution. Les joints d'étanchéité entre un arbre tournant et l'alésage d'un moteur présentent des problématiques sensiblement identiques à celles des bouchons. Aussi, la présente invention vise à pallier aux inconvénients de l'art antérieur en proposant un dispositif d'étanchéité d'une portée cylindrique pour un moteur de conception simple et économique assurant une étanchéité à lui-seul durable dans le temps.

A cet effet, l'invention a pour objet un dispositif d'étanchéité d'un orifice d'un moteur s'étendant selon une direction, ledit dispositif comportant un insert métallique avec une portée approximativement cylindrique ou légèrement conique dont au moins la face extérieure est recouverte d'un revêtement élastique susceptible d'être comprimé entre ledit insert et le moteur, **caractérisé en ce que** la portée de l'insert a des formes adaptées pour pouvoir s'expanser radialement et ainsi renforcer l'effort de compression du revêtement élastique, et en ce que l'insert comprend plusieurs languettes s'étendant radialement avec une longueur telle que lorsque ledit dispositif est mis en place, les extrémités desdites languettes viennent en contact avec la paroi de l'orifice du moteur et génèrent des efforts concentriques qui tendent à déformer l'insert et à produire une expansion de ladite portée.

D'autres caractéristiques et avantages ressortiront de la description qui va suivre de l'invention, description donnée à titre d'exemple uniquement, en regard des dessins annexés sur lesquels ;
- la figure 1A est une coupe d'une partie d'un bouchon selon un mode de réalisation de l'art antérieur,
- la figure 1B est une section transversale du bouchon de l'art antérieur illustré sur la figure 1A,
- la figure 2 est une vue en perspective d'un bouchon selon l'invention,

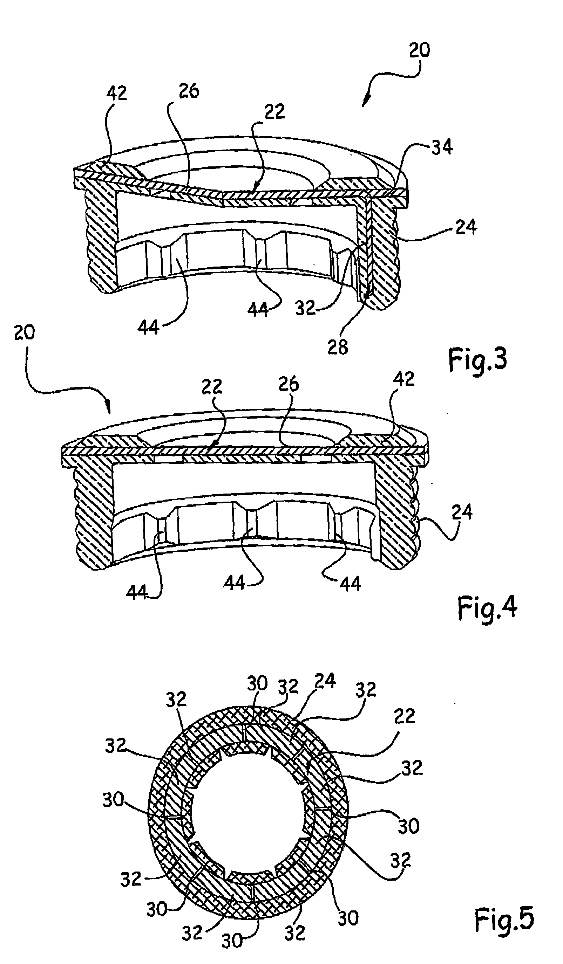

- la figure 3 est une vue en perspective d'une portion du bouchon de la figure 2,
- la figure 4 est une vue en perspective d'une moitié du bouchon de la figure 2,
- la figure 5 est une section transversale du bouchon de la figure 2,
- la figure 6A est une vue en perspective d'un premier mode de réalisation d'un insert du bouchon de la figure 2,
- la figure 6B est une vue de détails de l'insert de la figure 6A,
- la figure 7A est une vue en perspective d'un autre mode de réalisation d'un insert du bouchon de la figure 2,
- la figure 7B est une vue de détails de l'insert de la figure 7A,
- la figure 8A est une vue en perspective de l'insert déformé une .fois le bouchon mis en place dans l'orifice,
- la figure 8B est une vue de détails de l'insert de la figure 8A,
- la figure 9 est une vue en perspective d'un dispositif d'étanchéité selon une autre variante de l'invention sous forme d'une bague, et
- la figure 10 est une vue en perspective d'une variante de réalisation d'un insert du dispositif de la figure 9.

Sur la figure 2, on a représenté en 20 un bouchon destiné à obturer un orifice de préférence cylindrique prévu au niveau d'un moteur. Ce type de bouchon est plus particulièrement destiné à obturer les orifices dits techniques à savoir nécessaires pour la fabrication du moteur. Néanmoins l'invention n'est pas limitée à cette application.

Ce bouchon 20 comprend un insert métallique 22 au moins partiellement recouvert d'un revêtement élastique 24.

Pour la suite de la description, on entend par direction longitudinale, la direction confondue avec l'axe de l'orifice. Par plan transversal, on entend un plan perpendiculaire à la direction longitudinale, Par direction radiale, on entend une direction contenue dans un plan transversal et passant par la direction longitudinale.

L'insert 22 comprend une première partie sous forme d'une plaque 26 sensiblement disposée dans un plan transversal reliée à une portée 28 approximativement cylindrique ou légèrement conique ayant pour axe l'axe longitudinal.

La portée 28 est recouverte au moins au niveau de sa surface extérieure du revêtement élastique 24 susceptible d'être intercalé entre la portion cylindrique de l'orifice à obturer et ladite portée.

Selon l'invention, la portée 28 de l'insert a des formes adaptées pour pouvoir s'expanser radialement et ainsi renforcer l'effort de compression du revêtement élastique 24. Cette propriété de la portée permet d'obtenir une réserve d'élasticité et de compenser dans le temps la perte d'élasticité du revêtement 24 afin de garantir une excellente étanchéité. Elle permet également de pouvoir choisir pour le revêtement des matériaux avec une élasticité moins importante initialement mais qui tendent à la conserver dans le temps.

Selon un mode de réalisation , la portée 28 comprend au moins sur une partie de sa périphérie des ondulations dont les lignes de crêtes sont orientées approximativement selon la direction longitudinale. Ces ondulations permettent à la portée de pouvoir se déformer et s'expanser.

Selon un mode de réalisation préféré de l'invention, l'insert comprend au niveau de la portée 28 des découpes 30 s'étendant approximativement selon la direction longitudinale, de manière à scinder ladite portée en plusieurs portions de cylindre 32. De la sorte, la portée 28 peut s'expanser radialement les portions de cylindre 32 s'évasant et s'écartant les unes des autres.

Les portions cylindriques 32 sont reliées à la plaque 26 par l'intermédiaire de pattes 34 courbes assurant chacune la liaison entre la plaque 26 disposée dans un plan transversal et une portion de cylindre 32 d'axe longitudinal.

Selon un mode de réalisation, la portée 28 comprend huit portions de cylindre 32.

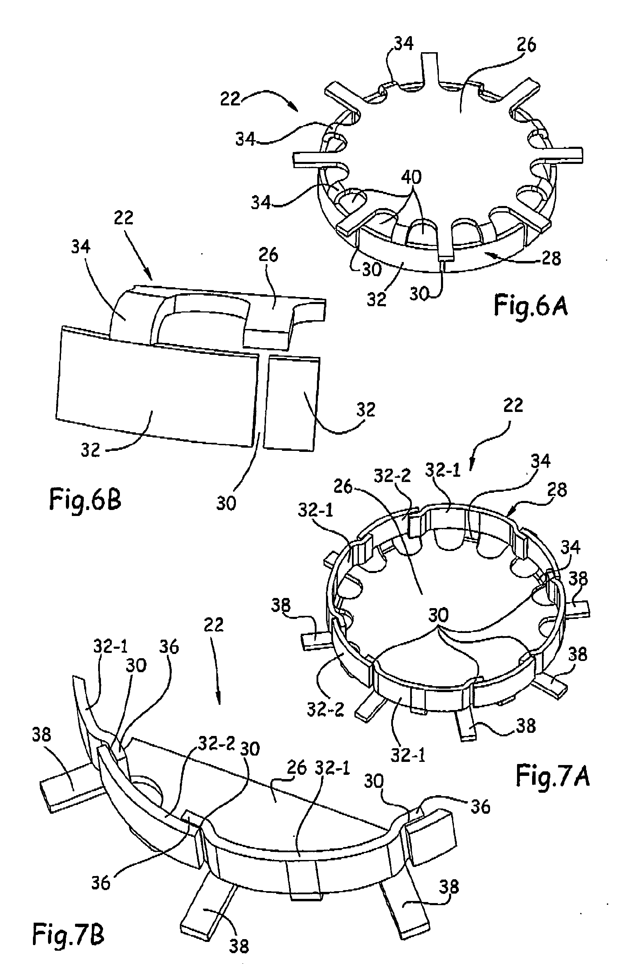

Selon une première variante illustrée sur les figures 6A et 6B, les portions cylindrique 32 sont disposées bout à bout et ne se chevauchent pas.

Selon une deuxième variante illustrée sur les figures 7A et 7B, les portions cylindriques 32 ont des bords qui se chevauchent légèrement. Ainsi, l'insert comprend des portions de cylindre 32-1 comportant au niveau de leurs bords orientés selon la direction longitudinale un prolongement 36 en S plaqué contre la face intérieure de la portion de cylindre 32-2 adjacente. Selon le mode de réalisation illustré, une portion de cylindre sur deux comprend au niveau de chacun de ses bords longitudinaux un prolongement 36 prenant appui contre la face intérieure de la portion de cylindre adjacente qui ne comprend aucun prolongement.

Cette configuration permet d'obtenir une meilleure répartition des efforts de pression à l'encontre de la paroi cylindrique de l'orifice à obturer.

Selon une caractéristique importante de l'invention, l'insert 22 comprend plusieurs languettes 38 s'étendant radialement à partir de la plaque 26, dans le plan de ladite plaque, avec une longueur telle qu'elles viennent en déport par rapport au diamètre extérieur de la portée revêtue 28, réparties autour de la plaque 26. Les extrémités des languettes 38 sont disposées au niveau d'un cercle imaginaire dont le diamètre est légèrement supérieur au diamètre de l'orifice dans lequel doit être place le bouchon. De ce fait lorsque le bouchon est mis en place, les extrémités des languettes viennent en contact avec la paroi de l'orifice et génèrent des efforts concentriques qui tendent à déformer l'insert 22 et plus particulièrement à produire une déflexion de la partie de l'insert disposée dans un plan transversal.

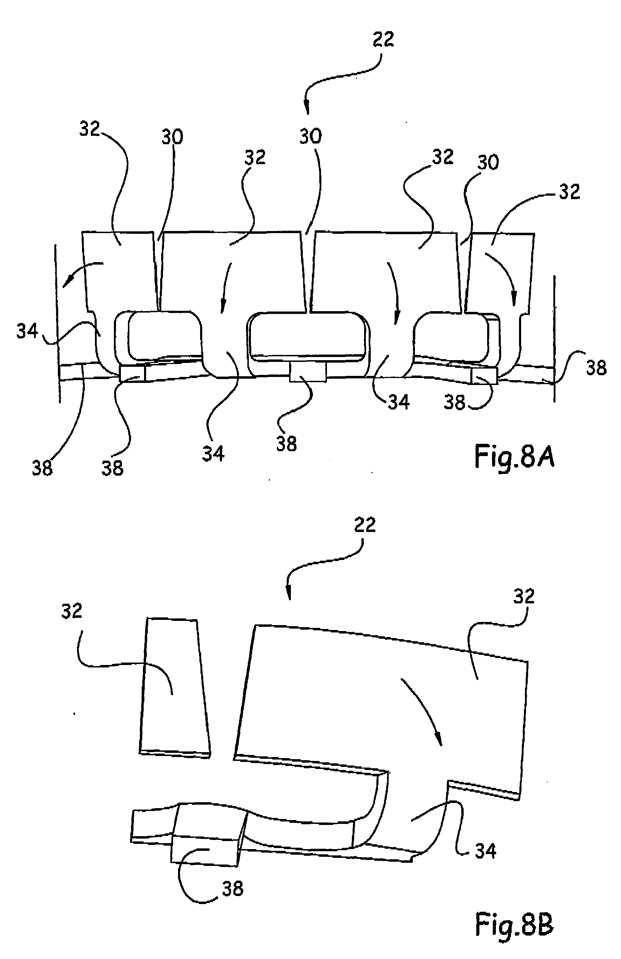

Cette déflexion qui dans le cas d'une plaque 26 la rend légèrement bombée ou conique comme if lustré sur la figure 8A, provoque un évasement de la portée 28, notamment des portions de cylindre 32 qui tend à augmenter l'effort de compression du revêtement élastique 24 entre l'insert 22 et la paroi de l'orifice et renforce l'étanchéité du bouchon.

Ainsi, cette réflexion permet d'obtenir deux fonctions, à savoir le maintien du dispositif d'étanchéité par arc-boutement des languettes avec des contraintes résiduelles très faibles au niveau de l'orifice du moteur et une déformation de la portée qui tend à augmenter le taux de compression du revêtement élastique 24 et donc une meilleur étanchéité.

Selon l'invention, on note que les fonctions de maintien et d'étanchéité sont dissociées si bien que l'altération d'une de ces deux fonctions n'engendre pas automatiquement l'altération de l'autre fonction. De plus cette dissociation permet d'optimiser ces deux fonctions indépendamment l'une de l'autre alors que lorsqu'eUes sont associées l'amélioration de l'une tend souvent à réduire les caractéristiques de l'autre.

Selon un mode de réalisation, l'insert 22 comprend des languettes disposées diamétralement opposées. Selon l'exemple illustré l'insert 22 comprend huit languettes 38 ce qui permet d'obtenir une bonne répartition des efforts concentriques.

Selon ce mode de réalisation, les extrémités des languettes 38 sont réparties sur un cercle dont le diamètre est légèrement supérieur à celui de l'orifice à obturer pour obtenir des efforts concentriques qui tendent à déformer la plaque 26 de manière à provoquer l'évasement des portions de cylindre 32.

La plaque 26 doit avoir une épaisseur et être réalisée en un matériau permettant d'obtenir ces déformations.

Cette tôle est en suivant découpée puis pliée pour former les portions de cylindre 32,

Pour assurer un meilleur fonctionnement, les languettes 38 et les pattes 34 ont la même largeur et sont disposées autour de la plaque de manière alternée. Une échancrure 40 en forme de U est réalisée entre les languettes 38 et les pattes 34, la base du U étant décalée vers l'intérieur du bouchon par rapport au diamètre de la portée 28. Cette configuration permet d'avoir des pattes 34 courbes assurant la liaison entre les portions de cylindre 32 et la plaque 26 tout en conservant les languettes 38 dans le plan de la plaque 26.

Une fois mis en forme, l'insert 22 est couvert au moins partiellement par un revêtement élastique.

Selon un mode de réalisation privilégié, l'insert 22 est placé dans un moule dans lequel est injecté le revêtement élastique.

Le revêtement élastique peut être réalisé en caoutchouc, de préférence synthétique de type ACM ou FPM.

Avantageusement, le revêtement élastique a une dureté approximativement de 80 Shore A.

Le revêtement élastique recouvre la surface extérieure de la portée 28 et définit un cylindre avec avantageusement des ondulations formant des stries circulaires renforçant l'étanchéité.

Le revêtement élastique se prolonge selon la direction longitudinale au-delà du bord de la portée 28 opposé à la plaque 26 et recouvre également la surface intérieure de la portée 28,

Le revêtement élastique peut recouvrir la surface intérieure de la plaque 26. Une couronne 42 de revêtement élastique peut être prévue au niveau de la face extérieure de la plaque 26 afin de recouvrir les échancrures 40 et obtenir un bouchon étanche.

La capacité des pattes 34 à se déformer de manière élastique peut être modulée en ajustant les épaisseurs du revêtement élastique de part et d'autre desdites pattes 34 au niveau de la zone de jonction entre la plaque 26 et la portée 28. Ainsi, le bouchon peut avoir un diamètre intérieur plus petit au niveau de la zone proche de la plaque 26 qu'au niveau de la zone proche de son extrémité.

Les formes du revêtement élastique sont également ajustées de manière à assurer le démoulage du bouchon et le calage de l'insert dans le moule.

Ainsi, la partie centrale de la face extérieure de la plaque 26 n'est pas recouverte. Au niveau de la face intérieure de la plaque 26, le revêtement élastique comprend des trous (par exemple trois) de manière à découvrir l'insert au niveau des trous. Pour renforcer la stabilité de l'insert dans le moule, les extrémités de la face supérieure des languettes 38 ne sont pas recouvertes par le revêtement élastique.

Le revêtement élastique comprend au niveau de la face intérieure de la portée 28 au droit de chaque portion de cylindre 32 un évidement 44 permettant de découvrir à ce niveau l'insert 32 afin de centrer de manière optimale la portée 28 dans le moule pour avoir une épaisseur sensiblement constante du revêtement élastique au niveau de la face extérieure de la portée.

Bien que décrite appliquée à un bouchon, l'invention peut également être utilisée dans le cas d'un joint sous forme d'une bague disposée entre un arbre et son alésage.

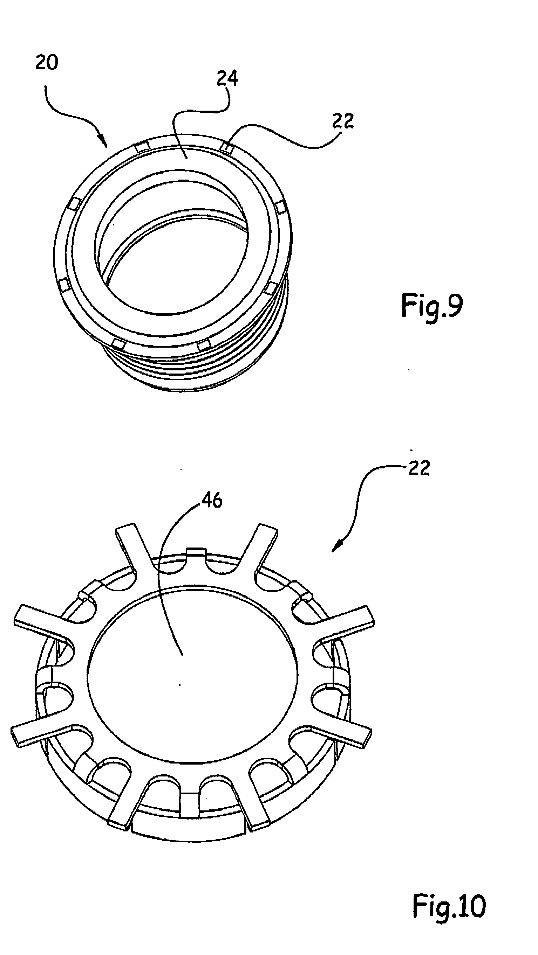

Dans ce cas, comme illustré sur les figures 9 et 10, l'insert 22 comprend un orifice 46 pour permettre le passage de l'arbre.

## Revendications

1. Dispositif d'étanchéité d'un orifice d'un moteur s'étendant selon une direction, ledit dispositif comportant un insert métallique (22) avec une portée (28) approximativement cylindrique ou légèrement conique dont au moins la face extérieure est recouverte d'un revêtement élastique (24) susceptible d'être comprimé entre ledit insert et le moteur, **caractérisé en ce que** la portée (28) de l'insert (22) a des formes adaptées pour pouvoir s'expanser radialement et ainsi renforcer l'effort de compression du revêtement élastique (24), et **en ce que** l'insert (22) comprend plusieurs languettes (38) s'étendant radialement avec une longueur telle que lorsque ledit dispositif est mis en place, les extrémités desdites languettes (38) viennent en contact avec la paroi de l'orifice du moteur et génèrent des efforts concentriques qui tendent à déformer l'insert (22) et à produire une expansion de ladite portée (28).

2. Dispositif d'étanchéité selon la revendication 1, **caractérisé en ce que** l'insert comprend au niveau de la portée (28) des découpes (30) s'étendant approximativement selon la direction de l'orifice de manière à scinder ladite portée en plusieurs portions de cylindre (32).

3. Dispositif d'étanchéité selon la revendication 2, **caractérisé en ce que** l'insert comprend une plaque (26) dans un plan perpendiculaire à la direction de l'orifice et une portée (28) constituée de plusieurs portions cylindriques (32) chacune reliée à ladite plaque (26).

4. Dispositif d'étanchéité selon la revendication 3, **caractérisé en ce que** chaque portion cylindrique (32) est reliée à la plaque (26) par l'intermédiaire d'une patte (34) courbe, les pattes (34) et les languettes (38) étant réparties autour de la plaque (26) de manière alternée.

5. Dispositif d'étanchéité selon la revendication 4, **caractérisé en ce que** l'insert (22) comprend des échancrures en U entre les languettes (38) et les pattes (34) dont la base est décalée vers l'intérieur du bouchon par rapport au diamètre de la portée (28).

6. Dispositif d'étanchéité selon l'une quelconque des revendications 2 à 5, **caractérisé en ce que** les portions cylindriques (32) sont disposées bout à bout et ne se chevauchent pas.

7. Dispositif d'étanchéité selon l'une quelconque des revendications 1 à 5, **caractérisé en ce que** des portions de cylindre (32-1) comportent au niveau de leurs bords orientés selon la direction de l'orifice un prolongement (36) en S plaqué contre la face intérieure de la portion de cylindre (32-2) adjacente.

8. Bouchon d'étanchéité selon l'une quelconque des revendications précédentes, **caractérisé en ce qu'**il comprend une plaque (26) sans orifice.

9. Bague d'étanchéitê selon l'une quelconque des revendications 1 à 7, **caractérisée en ce qu'**elle comprend une plaque (26) avec un orifice (46).
